# EUROPÄISCHE PATENTSCHRIFT

(11) **EP 3 289 880 B1**
(45) Veröffentlichungstag und Bekanntmachung des Hinweises auf die Patenterteilung: **13.01.2021**
(21) Anmeldenummer: 16187011.8
(22) Anmeldetag: 02.09.2016
(51) Int. Cl.: A21C 5/00, A21C 11/16

(54) **VORRICHTUNG UND VERFAHREN ZUM FORMEN UND UNTERTEILEN WENIGSTENS EINES PASTÖSEN LEBENSMITTELSTRANGS IN SCHEIBENFÖRMIGE PRODUKTE**
DEVICE AND METHOD FOR FORMING AND SUBDIVIDING AT LEAST ONE PASTY FOOD STRING INTO SLICE-SHAPED PRODUCTS
DISPOSITIF ET PROCEDE DESTINES A FORMER ET DIVISER UNE FICELLE ALIMENTAIRE PÂTEUX EN TRANCHES

(43) Veröffentlichungstag der Anmeldung: 07.03.2018
(73) Patentinhaber: Albert Handtmann Maschinenfabrik GmbH & Co. KG, 88400 Biberach (DE)
(72) Erfinder: Bächtle, Manfred, 88433 Schemmerhofen (DE); Reutter, Siegfried, 88436 Eberhardzell (DE); Cret, Claudiu, 88348 Bad Saulgau (DE); Haid, Simon, 89613 Moosbeuren (DE); Teufel, Daniel, 88433 Schemmerhofen (DE); Werner, Achim, 88437 Maselheim (DE); Willburger, Peter, 88255 Baindt (DE)
(74) Vertreter: Grünecker Patent- und Rechtsanwälte PartG mbB

(56) Entgegenhaltungen:
- EP-A1- 0 466 519
- EP-A1- 2 789 239
- JP-A- 2002 306 054
- JP-U- H0 322 674
- US-A- 5 643 617

## Beschreibung

Die Erfindung betrifft eine Vorrichtung und ein Verfahren zum Formen und Unterteilen wenigstens eines pastösen Lebensmittelstrangs in scheibenförmige Produkte.

Üblicherweise wird zur Herstellung von scheibenförmigen Produkten, wie beispielsweise Hamburgern oder Griesschnitten, ein Lebensmittelstrang durch ein Formatteil extrudiert und damit die gewünschte Profilkontur bestimmt. Die Profilkontur ist bei einem Hamburger üblicherweise kreisscheibenförmig und bei einer Griesschnitte rautenförmig, allerdings sind auch beliebige andere Formen denkbar. Der Lebensmittelstrang wird entsprechend der gewünschten Produktdicke durch das Formatteil gepresst, mit Formplatten oder einem Messer abgetrennt und als scheibenförmiges Produkt auf einem Förderband oder dergleichen abgelegt. Anschließend werden die scheibenförmigen Produkte mit weiteren Produktionsschritten weiterverarbeitet, beispielsweise in einer Verpackungsstation.

Die EP 1 576 883 A1 offenbart eine Vorrichtung zur Lebensmittelherstellung, bei der die pastöse Masse mit einer Förderpumpe und einem Verteiler auf vier Versorgungslinien verteilt wird, die jeweils mit einer Düse mit kreisscheibenförmigem Profilquerschnitt zum Formen eines Lebensmittelstrangs versehen sind. Zwei nachgeordnete und gegeneinander verfahrbare Formplatten weisen jeweils vier mit den Düsen korrespondierende, kreisrunde Öffnungen auf, um den Lebensmittelstrang entsprechend der gewünschten Dicke des scheibenförmigen Produkts abzuscheren.

Weiterhin offenbart die EP 1 447 006 A1 eine Portioniervorrichtung für Nahrungsmittel, bei der die pastöse Masse in einen Formraum eingefüllt wird, der im Querschnitt der gewünschten Profilkontur des scheibenförmigen Produkts entspricht. Eine Schneidvorrichtung weist ein Schneidmesser auf, das zum Portionieren in den Formraum eingeführt wird und dort die pastöse Masse der Produktdicke entsprechend abschneidet.

Nachteilig bei den bekannten Vorrichtungen und Verfahren ist, dass die Formplatten bzw. Schneidmesser beim Trennvorgang entlang der Profilkontur mit dem größten Produktdurchmesser geführt werden müssen. Dadurch kann es gelegentlich vorkommen, dass das scheibenförmige Produkt durch die Querkraft nicht nur geschnitten sondern auch gequetscht wird, was zu ungewollten Veränderungen der Produktform oder zu einer verschmierten Produktoberfläche führen kann.

Weiterhin ist dabei nachteilig, dass die Formatteile der Düse bei einer Umstellung auf ein Produkt mit anderer Profilkontur ausgetauscht werden müssen.

Die EP 2 789 239 A1 offenbart eine Vorrichtung und ein Verfahren zum Herstellen kugelförmig geformter Produkte.

Die EP 0 466 519 A1 offenbart ein Verfahren und eine Vorrichtung zum kontinuierlichen Teilen von Teig.

Die JP 2002 306054 A offenbart ein Verfahren und eine Vorrichtung zum Teilen eines stangenförmigen Lebensmittelstrangs.

Die JP H03 22674 U offenbart eine Werkzeugausrüstung zum Extrudieren von Nudelteig.

Die US 5,643,617 offenbart eine Teil- und Formmaschine für Teigstücke.

Die EP 1 576 883 A1 offenbart eine Nahrungsmittelverarbeitungsvorrichtung.

Die EP 1 447 006 A1 offenbart eine Portioniervorrichtung für Nahrungsmittel.

Aufgabe der vorliegenden Erfindung ist es daher, eine Vorrichtung und ein Verfahren zum Formen und Unterteilen wenigstens eines pastösen Lebensmittelstrangs in scheibenförmige Produkte bereitzustellen, die eine verbesserte Formgebung des scheibenförmigen Produkts ermöglichen und die flexibler einsetzbar sind.

Zur Lösung dieser Aufgabenstellung stellt die Erfindung eine Vorrichtung zum Formen und Unterteilen wenigstens eines pastösen Lebensmittelstrangs in scheibenförmige Produkte mit den Merkmalen des Anspruchs 1 bereit. Vorteilhafte Ausführungsformen sind in den Unteransprüchen genannt.

Erfindungsgemäß ist eine Formdüse zum Extrudieren des Lebensmittelstrangs vorgesehen, die mit einer Düsenöffnung die Dicke des scheibenförmigen Produkts bestimmt. Folglich wird also die Dicke durch die Formdüse selbst und nicht mehr durch das Abtrennen bestimmt. Dadurch muss der Lebensmittelstrang auch nicht mehr entlang der Profilkontur mit dem größten Produktdurchmesser des scheibenförmigen Produkts abgetrennt werden. Weiterhin ist erfindungsgemäß vorgesehen, dass wenigstens eine Formplatte der Formdüse nachgeordnet ist, die beim Extrudieren mit wenigstens einem Stellglied in wenigstens einer Komponente quer zur Förderrichtung verfahrbar ist. Weiterhin wird das wenigstens eine Stellglied mit einer Steuereinheit derart gesteuert, dass die Längskontur des scheibenförmigen Produkts während des Extrudierens variabel geformt wird. Dadurch wird mit der Formplatte die gewünschte Längskontur des scheibenförmigen Produkts geformt, die die Profilkontur bildet. Folglich wird also die Profilkontur nicht mit der Formdüse sondern mit der Formplatte variabel erzeugt. Dies ermöglicht eine besonders geringe Belastung des scheibenförmigen Produkts in Querrichtung und damit eine hohe Formstabilität. Darüber hinaus kann die wenigstens eine Formplatte beliebig angesteuert werden, wodurch ein Wechsel der Profilkontur durch eine einfache Änderung der Ansteuerung des Stellglieds möglich ist. Dadurch ist die Vorrichtung besonders flexibel einsetzbar.

Die Vorrichtung kann ein Förderwerk zum Fördern des Lebensmittelstrangs durch die Formdüse umfassen. Die Vorrichtung kann einen Trichter aufweisen, um eine pastöse Lebensmittelmasse aufzunehmen und dem Förderwerk zuzuführen. Denkbar ist, dass die Vorrichtung mit einem Wagen für die Lebensmittelmasse oder dergleichen koppelbar ausgebildet ist, der mit einer entsprechenden Hubeinrichtung anhebbar ist, um die pastöse Lebensmittelmasse in den Trichter zu kippen.

Die pastöse Lebensmittelmasse kann Wurstbrät, eine Kartoffelmasse, eine Grießmasse, eine Fleischmasse oder dergleichen umfassen. Denkbar ist, dass die scheibenförmigen Produkte Hamburger, Griesschnitten oder dergleichen sind.

Mit "scheibenförmigen Produkt" ist hier gemeint, dass der maximale Durchmesser der Profilkontur größer als die Dicke ist, vorzugsweise um wenigstens den Faktor 2, weiterhin vorzugsweise um wenigstens den Faktor 4. Denkbar ist auch, dass die Quadratwurzel aus der Fläche der Profilkontur größer als die Dicke ist, vorzugsweise um wenigstens den Faktor 2, weiterhin vorzugsweise um wenigstens den Faktor 4. Mit "Profilkontur" ist hier gemeint, dass dies die Kontur der Querschnittsfläche des Produkts ist.

Das Förderwerk kann wenigstens eine Schnecke umfassen, um die pastöse Lebensmittelmasse zur Formdüse zu fördern. Ein Antrieb kann dazu vorgesehen sein, die Schnecke zu drehen. Denkbar ist, dass zwei Schnecken ineinandergreifen, um die pastöse Lebensmittelmasse zu fördern. Jede Art von Förderwerk, das geeignet ist, pastöse Massen bzw. den pastösen Lebensmittelstrang zu fördern, kann hier eingesetzt werden. Beispielsweise kann das Förderwerk ein Flügelförderwerk, ein Schneckenförderwerk oder aber auch einen unter Druck stehenden Behälter umfassen. Dem Förderwerk kann ein Verteiler nachgeschaltet sein, um die pastöse Lebensmittelmasse auf mehrere Formkanäle in der Formdüse zu verteilen.

Die Formdüse kann dazu vorgesehen sein, den Lebensmittelstrang aus der pastösen Lebensmittelmasse zu formen. Mit Extrudieren kann hier gemeint sein, dass die pastöse Lebensmittelmasse durch die Düsenöffnung gepresst wird, um den Lebensmittelstrang zu formen. Die Düsenöffnung kann eine im Wesentlichen rechteckige Kontur aufweisen, deren Höhe der Dicke des scheibenförmigen Produkts und deren Breite wenigstens dem maximalen Durchmesser des scheibenförmigen Produkts entsprechen. Anders ausgedrückt kann die Düsenöffnung eine Schlitz- oder eine spaltförmige Öffnung umfassen, um den Lebensmittelstrang zu Extrudieren. Denkbar ist auch, dass die Formdüse mehrere Formkanäle umfasst, mit denen mehrere Lebensmittelstränge parallel formbar sind.

Mit Formplatte ist hier ein Element gemeint, mit dem die Längskontur der scheibenförmigen Produkte formbar ist. Die Formplatte kann eine Formkante aufweisen, mit der die Längskontur des scheibenförmigen Produkts formbar ist. Denkbar ist, dass zwei Formplatten gegenüberliegend an der Formdüse angeordnet sind, um zwei Seiten des scheibenförmigen Produkts variabel zu formen. Die Formkante kann beispielsweise klingenartig ausgebildet sein, um einen Teil des Lebensmittelstrangs abzustreifen. Ebenso kann die Formplatte dazu ausgebildet sein, den Lebensmittelstrang abzutrennen. Die Formplatte kann nach der Formdüse seitlich an der Düsenöffnung angeordnet sein. Die Formplatten sind quer oder schräg zur Richtung der Dicke des scheibenförmigen Produkts verfahrbar. Anders ausgedrückt ist die Formplatte derart an der Formdüse angeordnet, dass sie eine in Bezug auf die Dickenausdehnung quer liegende Produktseite formt. Die Dicke des scheibenförmigen Produkts bleibt unberührt.

Die Stellglieder können über Verbindungselemente, Getriebe, Hebelelemente, oder auch starr mit den Formplatten verbunden sein. Die Stellglieder können jeweils einen Schrittmotor, Linearantrieb oder Servomotor umfassen. Die Formplatte kann mit dem Stellglied im Wesentlichen quer zu einer Förderrichtung des Lebensmittelstrangs beim Extrudieren verfahrbar sein.

Dass "die Steuereinheit das Stellglied synchron zur Extrusionsgeschwindigkeit steuert", bedeutet, dass das wenigstens eine Stellglied korrespondierend mit einer Geschwindigkeit der Extrusion des Lebensmittelstrangs durch die Düsenöffnung, einer Förderbewegung des Lebensmittelstrangs und/oder einer Fördergeschwindigkeit des Förderwerks verfahren wird. Ebenso kann die Extrusionsgeschwindigkeit eine Geschwindigkeit sein, mit der der Lebensmittelstrang die Düsenöffnung verlässt. Vorzugsweise kann die Extrusionsgeschwindigkeit des Lebensmittelstrangs beim Extrudieren gesteuert oder erfasst werden, um die Stellglieder synchron zur Extrusionsgeschwindigkeit zu steuern. Beispielsweise kann der Lebensmittelstrang mit einer konstanten Geschwindigkeit extrudiert werden, wobei das Stellglied die Formplatte mit einer konstanten Geschwindigkeit verfährt, um eine schräge Längskontur zu erzeugen. Durch die Kombination aus der Förderbewegung des Lebensmittelstrangs und der Verfahrbewegung der Formplatte ergibt sich die Längskontur.

Die Längskontur bildet wenigstens teilweise die Profilkontur des scheibenförmigen Produkts. Mit "Längskontur" ist hier die Kontur des scheibenförmigen Produkts entlang der Förderrichtung gemeint. Die Längskontur kann als Steuerdaten in der Steuereinheit hinterlegt sein, beispielsweise durch eine Eingabeeinheit, eine Datenverbindung oder dergleichen.

Zwei oder noch mehr der Formplatten können jeweils mit einem der Stellglieder verbunden sein, wobei die Stellglieder mit der Steuereinheit getrennt ansteuerbar ausgebildet sind, um entsprechend unterschiedliche Längskonturen des scheibenförmigen Produkts variabel zu formen. Denkbar ist auch, dass nur eine Formatplatte mit einem Stellglied verbunden ist, um eine einseitige Längskontur des scheibenförmigen Produkts zu formen. Dabei kann die entsprechend gegenüberliegende Längskontur mit der Formdüse oder mit einer starr angeordneten Formplatte geformt werden. Dadurch kann das scheibenförmige Produkt von mehreren Seiten her verformt werden, was eine flexiblere Produktgestaltung erlaubt. Denkbar ist, dass für jede Formplatte ein Stellglied vorhanden ist, das mit der Steuereinheit ansteuerbar ist. Beispielsweise können genau zwei Formplatten vorhanden sein, die gegenüberliegend an der Formdüse angeordnet sind. Dadurch können entsprechend gegenüberliegende Längskonturen des scheibenförmigen Produkts gleichzeitig geformt werden. Denkbar ist jedoch auch, dass nur eine Formplatte die Längskontur von einer Seite her formt.

Das Förderwerk und/oder die Formdüse kann zum Extrudieren mehrerer Lebensmittelstränge in parallelen Bahnen ausgebildet sein, wobei die wenigstens eine Formplatte damit korrespondierende Formkanten aufweist, um gleichzeitig einander entsprechende Längskonturen mehrerer scheibenförmige Produkte variabel zu formen. Dadurch kann der Durchsatz der Vorrichtung erhöht werden. Beispielsweise kann das Förderwerk den zuvor erwähnten Verteiler und die Formdüse mehrere Formkanäle umfassen. Die Formkanäle können einen Versatz quer zu Bewegungsrichtung der Formplatten aufweisen. Dadurch können die Düsenöffnungen enger zusammengelegt werden, ohne dass sich die Formkanten der Formplatten für unterschiedliche Düsenöffnungen gegenseitig beeinflussen. Eine Formplatte kann zwei oder noch mehr Öffnungen für die Lebensmittelstränge mit jeweils einer Formkante aufweisen, die einander entsprechende Längskonturen formen. Beispielsweise können zwei Formplatten mit jeweils zwei oder noch mehr Öffnungen nacheinander angeordnet sein, wobei eine Öffnung in der einen Formplatte mit einer anderen Öffnungen der anderen Formplatte zusammenwirkt, um gegenüberliegende Längskonturen eines der scheibenförmigen Produkte zu formen.

Zwei der Formplatten können mit einem oder mehreren Stellgliedern korrespondierend oder unabhängig voneinander gegeneinander wirkend verfahrbar sein, um mit zwei Formkanten gegenüberliegende Längskonturen des scheibenförmigen Produkts variabel zu formen. Dadurch kann ein scheibenförmiges Produkts besonders variabel von beiden Seiten her mit beliebigen Konturen geformt werden.

Zwei oder mehrere der Formplatten können in Förderrichtung in derselben Ebene oder nacheinander liegend angeordnet sein. Beispielsweise können zwei Formplatten in derselben Ebene angeordnet sein und gegeneinander wirken, um den Lebensmittelstrang abzutrennen. Denkbar ist auch, dass zwei Formplatten nacheinander liegend angeordnet sind und wenigstens zwei miteinander korrespondierende Öffnungen aufweisen, wobei die eine Öffnung in der einen Formplatte dazu ausgebildet ist, eine erste Längskontur des scheibenförmigen Produkts zu formen, und wobei die andere Öffnung in der anderen Formplatte dazu ausgebildet ist, eine zur ersten Längskontur gegenüberliegende zweite Längskontur zu formen. Vorzugsweise können zwei nacheinander liegend angeordnete Formplatten dazu ausgebildet sein, den Lebensmittelstrang abzuscheren.

Das wenigstens eine Stellglied kann einen mit der Steuereinheit verbundenen Positionsgeber umfassen, um eine Stellposition der wenigstens einen Formplatte zu erfassen und zu steuern. Dadurch kann die Längskontur noch genauer geformt werden. Denkbar ist, dass der Positionsgeber ein Encoder ist. Vorzugsweise kann der Positionsgeber an einer Antriebsachse des Stellglieds angeordnet sein.

Die Steuereinheit kann dazu ausgebildet sein, das wenigstens eine Stellglied in Abhängigkeit einer Förderbewegung des Lebensmittelstrangs zu verfahren. Dadurch kann ein Aufquellen der Lebensmittelmasse beim Extrudieren berücksichtigt und die Längskontur genauer geformt werden. Denkbar ist, dass die Förderbewegung des Lebensmittelstrangs über eine Förder- oder Antriebsgeschwindigkeit des Förderwerks erfasst wird.

Denkbar ist auch, dass die Steuereinheit dazu ausgebildet ist, eine Fördergeschwindigkeit des Förderwerks zu steuern, um den Lebensmittelstrang mit einer variablen Förderbewegung durch die Formdüse zu fördern. Dadurch kann die Förderbewegung an das Fließverhalten des Lebensmittelstrangs angepasst werden, wodurch die Formgebung weiter verbessert wird. Beispielsweise kann der Lebensmittelstrang bei einer weitestgehend offenen Stellung der Formplatten besonders schnell und bei einer fast geschlossenen oder geschlossenen Stellung der Formplatten entsprechend langsam gefördert oder ganz angehalten werden. Die Stellglieder können dann besonders genau entsprechend der Fördergeschwindigkeit des Förderwerks gesteuert werden.

Eine vorzugsweise obere oder untere Formfläche der Düsenöffnung kann verstellbar ausgebildet sein, um die Dicke des scheibenförmigen Produkts einzustellen. Dadurch ist es möglich, die Vorrichtung an die gewünschte Dicke des scheibenförmigen Produkts einfach anzupassen. Die Formfläche kann mit einem mechanischen Stellmechanismus höhenverstellbar sein. Oben bzw. unten kann hier vertikal oben bzw. unten bedeuten. Vertikal kann hier die Richtung sein, die auf den Erdmittelpunkt gerichtet ist.

Darüber hinaus stellt die Erfindung ein Verfahren zum Formen und Unterteilen wenigstens eines pastösen Lebensmittelstrangs in scheibenförmige Produkte mit den Merkmalen des Anspruchs 10 bereit. Vorteilhafte Ausführungsformen sind in den Unteransprüchen genannt.

Erfindungsgemäß wird der Lebensmittelstrang durch die Düsenöffnung der Formdüse extrudiert, wobei mit der Düsenöffnung die Dicke des scheibenförmigen Produkts bestimmt wird. Folglich wird also die Dicke nicht mehr durch das Abtrennen bestimmt, sondern durch die Formdüse selbst. Dadurch muss der Lebensmittelstrang nicht mehr entlang der Profilkontur mit dem maximalen Produktdurchmesser des scheibenförmigen Produkts abgetrennt werden. Weiterhin ist erfindungsgemäß vorgesehen, dass wenigstens eine der Formdüse nachgeordnete Formplatte beim Extrudieren mit wenigstens einem Stellglied in wenigstens einer Komponente quer zur Förderrichtung verfahren wird. Weiterhin wird das wenigstens eine Stellglied mit einer Steuereinheit derart synchron zur Extrusionsgeschwindigkeit gesteuert, dass die Längskontur des scheibenförmigen Produkts während des Extrudierens variabel geformt wird. Dadurch wird mit den Formplatten die gewünschte Längskontur des scheibenförmigen Produkts geformt, die die Profilkontur bildet. Folglich wird also die Profilkontur nicht mit der Formdüse sondern mit den Formplatten variabel erzeugt. Dies ermöglicht eine besonders geringe Belastung der scheibenförmigen Produkte in Querrichtung und damit eine hohe Formstabilität. Darüber hinaus können die Formplatten beliebig angesteuert werden, wodurch ein Wechsel der Profilkontur durch eine einfache Änderung der Ansteuerung des Stellglieds bewirkt wird. Dadurch ist die Vorrichtung besonders flexibel einsetzbar.

Das Verfahren kann mit der zuvor beschriebenen Vorrichtung zum Formen und Unterteilen wenigstens eines pastösen Lebensmittelstrangs in scheibenförmige Produkte durchgeführt werden, vorzugsweise nach einem der Ansprüche 1-9. Darüber hinaus kann das Verfahren die zuvor in Bezug auf die Vorrichtung beschriebenen Merkmale einzelnen oder in beliebigen Kombinationen umfassen.

Der Lebensmittelstrang kann mit einem Förderwerk durch die Formdüse gefördert werden. Das Förderwerk kann den pastösen Lebensmittelstrang mit Flügeln, einer Schnecke oder mit einem Überdrück fördern.

Vorzugsweise kann die Steuereinheit das wenigstens eine Stellglied in Abhängigkeit einer Förderbewegung des Lebensmittelstrangs verfahren. Dadurch kann der Lebensmittelstrang mit einer variablen Förderbewegung gefördert werden, um das Fließverhalten der pastösen Lebensmittelmasse mit einzubeziehen.

Weiterhin kann die Steuereinheit eine Fördergeschwindigkeit des Förderwerks variabel steuern, um den Lebensmittelstrang mit einer variablen Förderbewegung durch die Formdüse zu fördern. Dadurch kann die Förderbewegung besonders einfach mit der Verfahrbewegung der Stellglieder synchronisiert werden.

Weitere Merkmale und Vorteile der Erfindung werden nachfolgend anhand der in den Figuren dargestellten Ausführungsbeispiele näher erläutert. Dabei zeigt:
- Figur 1: eine Übersichtsdarstellung eines Ausführungsbeispiels einer Vorrichtung zum Formen und Unterteilen wenigstens eines pastösen Lebensmittelstrangs in scheibenförmige Produkte in einer seitlichen Ansicht;
- Figuren 2A-2B: eine Darstellung zweier scheibenförmiger Produkte in einer perspektivischen Ansicht;
- Figuren 3A-3B: ein Ausführungsbeispiel einer Formdüse und zweier nachgeordneter Formplat-ten in einer Frontal- und einer Draufsicht; und
- Figuren 4A-4B: ein weiteres Ausführungsbeispiel einer Formdüse zum Extrudieren mehrerer Lebensmittelstränge und zweier nachgeordneten Formplatten in einer Frontal-und einer Draufsicht.

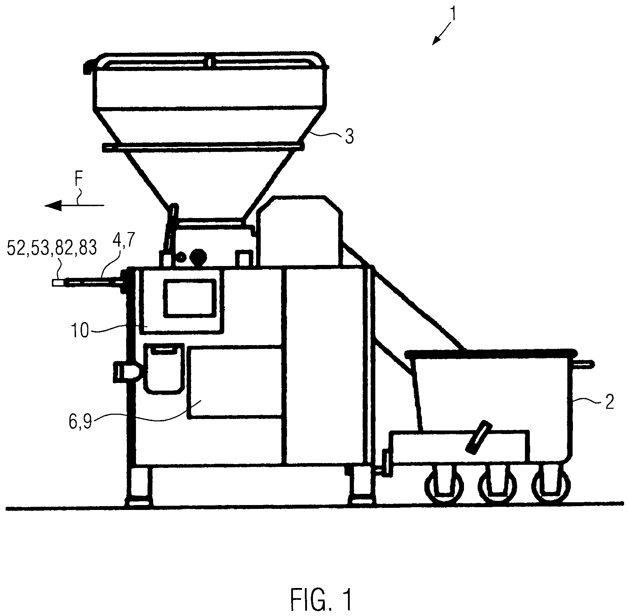

In der Figur 1 ist eine Übersicht eines Ausführungsbeispiels einer Vorrichtung 1 zum Formen und Unterteilen wenigstens eines pastösen Lebensmittelstrangs in scheibenförmige Produkte in einer seitlichen Ansicht dargestellt. Zu sehen ist, dass an der Vorrichtung 1 der Wagen 2 angekoppelt ist, mit der eine pastöse Lebensmittelmasse durch eine entsprechende Hubeinrichtung angehoben und in den Trichter 3 gekippt werden kann. Unterhalb des Trichters 3 befindet sich ein hier nicht genauer dargestelltes Förderwerk 10, mit dem die Masse im Betrieb durch die Formdüse 4, 7 gefördert und als Lebensmittelstrang extrudiert wird. Denkbar ist, dass das Förderwerk 10 ein Flügelförderwerk oder ein Schneckenförderwerk umfasst. Alternativ kann das Förderwerk einen unter Druck stehenden Behälter umfassen, um die Masse zu fördern.

Die Formdüse 4, 7 ist mit einer Düsenöffnung zum Extrudieren des Lebensmittelstrangs entlang der Förderrichtung F ausgebildet, die die Dicke des scheibenförmigen Produkts bestimmt. Weiterhin ist zu sehen, dass der Formdüse 4, 7 die Formplatten 52, 53, 82, 83 nachgeordnet sind, die beim Extrudieren mit jeweils einem Stellglied in wenigstens einer Komponente quer zur Förderrichtung F verfahrbar sind.

Des Weiteren ist die Steuereinheit 6, 9 zu sehen, die die Stellglieder synchron zum Förderwerk 10 derart steuert, dass die Formplatten 52, 53, 82, 83 während des Extrudierens die Längskontur des scheibenförmigen Produkts variabel formen.

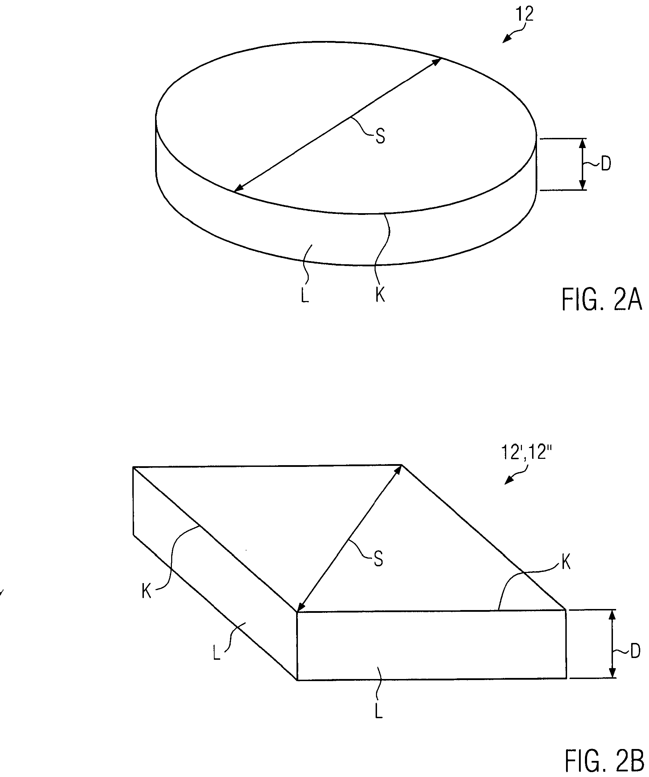

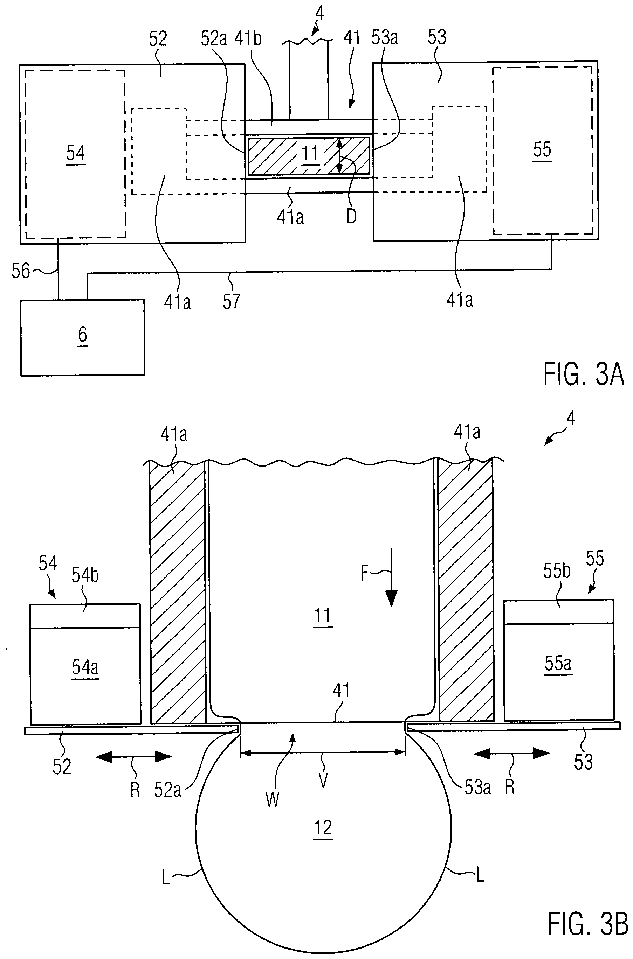

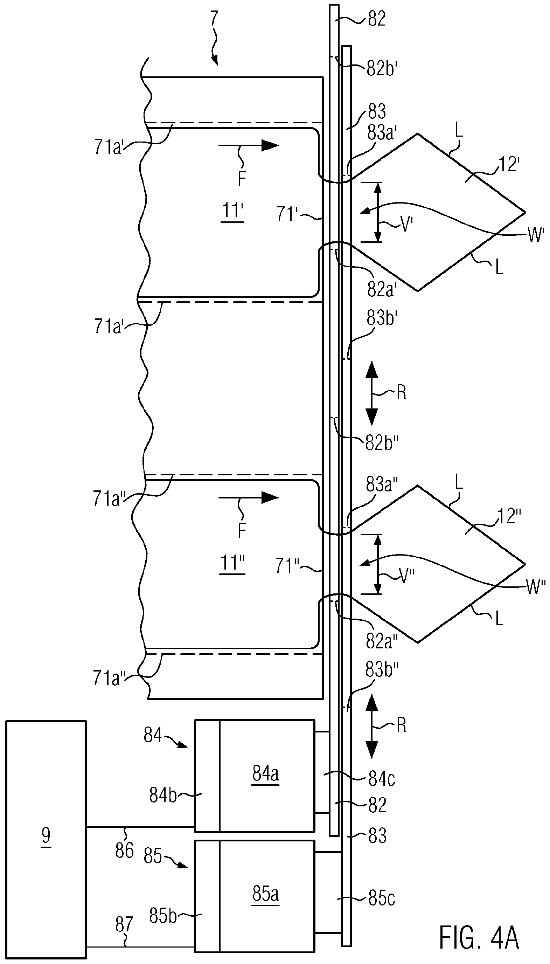

Das scheibenförmige Produkt 12, 12', 12" wird anhand der nachfolgenden Figuren 2A-2B näher erläutert. Ferner werden die Formdüsen 4 bzw. 7 und die nachgeordneten Formplatten 52, 53 bzw. 82, 83 weiter unten anhand der Figuren 3A-3B bzw. 4A-4B näher erläutert.

In der Figur 2A ist ein erstes kreisscheibenförmiges Produkt 12 in einer perspektivischen Ansicht genauer dargestellt. Hierbei handelt es sich um ein Hamburger-Patty mit der Dicke D, das eine im Wesentlichen kreisscheibenförmige Profilkontur K mit dem Durchmesser S aufweist. Zu sehen ist auch, dass die Dicke D wesentlich kleiner ist, als der Durchmesser S bzw. die Quadratwurzel aus der Fläche der Profilkontur K. Weiterhin ist zu sehen, dass die Profilkontur K an den Seiten des scheibenförmigen Produkts 12 durch die kreisförmige Längskontur L gebildet wird, die mit den Formplatten 52, 53, 82, 84 der Vorrichtung 1 der Figur 1 geformt wird.

In der Figur 2B ist ein zweites scheibenförmiges Produkt 12', 12" in einer perspektivischen Ansicht genauer dargestellt. Zu sehen ist, dass es sich hierbei um eine Griesschnitte mit der Dicke D handelt. Die Profilkontur K hat im Wesentlichen eine Rautenform, mit einem maximalen Durchmesser S. Auch hier ist zu sehen, dass die Dicke D wesentlich kleiner ist, als der maximale Durchmesser S bzw. die Quadratwurzel aus der Fläche der Profilkontur K. Des Weiteren werden die Seiten der Profilkontur K jeweils durch zwei im Wesentlichen gerade Längskonturen L gebildet, die zueinander abgewinkelt sind.

In der Figur 3A-3B ist ein Ausführungsbeispiel einer Formdüse 4 und zweier nachgeordneten Formplatten 52, 53 in einer Frontal- und einer Draufsicht dargestellt. Zu sehen ist die Formdüse 4 zum Extrudieren des Lebensmittelstrangs 11 entlang der Förderrichtung F. Die Formdüse 4 wird durch einen im wesentlichen U-förmigen Formkanal 41a gebildet, in den die obere Formfläche 41b stempelartig eingesetzt ist. Dadurch wird die Düsenöffnung 41 mit im Wesentlichen geraden Ober- und Unterseiten gebildet. Durch die Bodenfläche des U-förmigen Formkanals 41a und die obere Formfläche 41b wird die Dicke D des scheibenförmigen Produkts 12 bestimmt.

Das zuvor in Bezug auf die Figur 1 beschriebene Förderwerk 10 dient dazu, die pastöse Lebensmittelmasse durch die Düsenöffnung 41 zu drücken und so den Lebensmittelstrang 11 zu extrudieren.

Des Weiteren ist zu sehen, dass der Formdüse 4 die beiden Formplatten 52, 53 nachgeordnet sind und mit ihren Formkanten 52a, 53a ein Fenster W der variablen Breite V bilden. Die Formplatten 52, 53 sind jeweils mit einem Stellglied 54, 55 verbunden, mit denen sie in der Richtung R quer zur Förderrichtung F verfahrbar sind. Die beiden Formplatten 52, 53 sind also mit den beiden Stellgliedern 54, 55 gegeneinander wirkend verfahrbar, um mit den beiden Formkanten 52a, 53a die gegenüberliegenden Längskonturen L des scheibenförmigen Produkts 12 variabel zu formen.

Weiterhin ist die Steuereinheit 6 mit den Stellgliedern 54, 55 über die Leitungen 56, 57 verbunden, um Steuersignale oder Motorströme zu übertragen. Die Steuereinheit 6 steuert die Stellglieder 54, 55 synchron zum Förderwerk 10 derart, dass die beiden Formplatten 52, 53 während des Extrudierens synchron mit der Förderbewegung des Lebensmittelstrangs 11 verfahren werden und dadurch die Längskontur L des scheibenförmigen Produkts 12 bilden. Anders ausgedrückt werden die Formplatten 52, 53 in Abhängigkeit der Förderbewegung des durch die Formdüse 4 extrudierten Lebensmittelstrangs 11 so gesteuert, dass die Längskontur L des scheibenförmigen Produkts 12 abgefahren wird.

Weiterhin ist die Steuereinheit 6 mit dem in der Figur 1 dargestellten Förderwerk 10 verbunden und steuert dessen Fördergeschwindigkeit, um den Lebensmittelstrang 11 mit einer variablen Förderbewegung durch die Formdüse 4 zu fördern. Dadurch ist es beispielsweise möglich, die Fördergeschwindigkeit zu reduzieren oder das Förderwerk 10 ganz anzuhalten, wenn das scheibenförmige Produkt 12 vom restlichen Lebensmittelstrang 11 abgetrennt wird.

Des Weiteren ist zu sehen, dass die Stellglieder 54, 55 jeweils einen Antrieb 54a, 55a und einen damit verbundenen Positionsgeber 54b, 55b umfassen. Mit den Positionsgebern 54b, 55b werden die Dreh- oder Lagepositionen der jeweiligen Antriebe 54a, 55a erfasst und an die Steuereinheit 6 rückgemeldet. Folglich können die genauen Stellpositionen der Formplatten 52,53 erfasst und gesteuert werden. Dadurch ist eine noch genauere Formgebung des scheibenförmigen Produkts 12 möglich.

Ebenso ist es möglich, die Formplatten 52, 53 mit den Stellgliedern 54, 55 unabhängig voneinander zu bewegen. Dadurch können auch zur Förderrichtung F asymmetrische, scheibenförmige Produkte hergestellt werden.

In den Figuren 4A-4B ist ein weiteres, alternatives Ausführungsbeispiel einer Formdüse 7 zum Extrudieren mehrerer Lebensmittelstränge 11', 11" und zweier nachgeordneter Formplatten 82, 83 in einer Frontal- und einer Draufsicht dargestellt. Das Ausführungsbeispiel unterscheidet sich von dem in der Figur 3A-3B im Wesentlichen dadurch, dass gleichzeitig mehrere Lebensmittelstränge 11', 11" geformt und in die scheibenförmigen Produkte 12', 12" unterteilt werden.

Zu sehen ist, dass die Formdüse 7 mit zwei Formkanälen 71a', 71a" ausgebildet ist, die am Ende die Düsenöffnungen 71', 71" bilden. Diese können entweder starr ausgebildet sein oder, entsprechend der Figur 3A, mit zwei U-förmigen Kanälen und damit zusammenwirkenden Stempeln, die die obere oberen oder unteren Formflächen bilden. Darüber hinaus ist das Förderwerk 10 der Figur 1 in diesem Fall mit einem Verteiler versehen, der die pastöse Lebensmittelmasse auf die Kanäle 71a', 71a" gleichermaßen aufteilt. Dadurch ist das Förderwerk 10 und die Formdüse 7 zum Extrudieren der beiden Lebensmittelstränge 11', 11" in parallelen Bahnen ausgebildet.

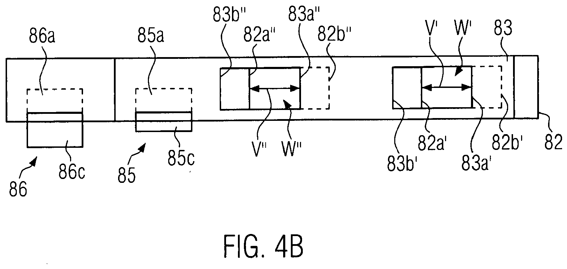

Des Weiteren ist zu sehen, dass die Formplatten 82, 83 zu den Kanälen 71a', 71a" korrespondierende Formkanten 82a', 83a', 82a", 83a" aufweisen, die die Öffnungen W', W" mit den variablen Breiten V', V" bilden. Dazu sind die Formplatten 82, 83 mit zwei im Wesentlichen rechteckigen Aussparungen versehen, deren Ränder die Formkanten 82a', 82a", 83a', 83a" bilden. Die Aussparungen sind so groß, dass die entsprechend gegenüberliegenden Kanten 82b', 82b", 83b', 83b" die Lebensmittelstränge 11', 11" nicht berühren. Die Formkanäle 71a', 71a" können einen Versatz quer zu Bewegungsrichtung der Formplatten 82, 83 (also in der Figur 4B nach oben oder unten) aufweisen. Dadurch können die Düsenöffnungen 71', 71" bzw. die Öffnungen W', W" enger zusammengelegt werden, so dass sich die Formkanten 82a', 82a", 83a', 83a" gegenseitig nicht beeinflussen.

Die Formplatten 82, 83 sind weiter über die Verbindungselemente 84c, 85c mit den beiden Stellgliedern 84, 85 verbunden und in Förderrichtung F nacheinander liegend angeordnet. Dadurch können die Aussparungen in den Formplatten 82, 83 gegeneinander verfahren werden, so dass damit die beiden Öffnungen W', W" mit den variablen Breiten V', V" gebildet und verändert werden können. Dadurch können im Anschluss an die Formdüse 7 gleichzeitig die beiden Lebensmittelstränge 11', 11" von beiden Seiten quer zur Förderrichtung geformt und so die Längskonturen L der beiden scheibenförmigen Produkte 12', 12" geformt werden.

Dazu ist die Steuereinheit 9 mit den Stellgliedern 84, 85 über die Leitungen 86, 87 verbunden. Die Steuereinheit 9 steuert die Stellglieder 84, 85 synchron zum Förderwerk 10 derart, dass die beiden Formplatten 82, 83 während des Extrudierens die Längskonturen L der scheibenförmigen Produkte 12', 12" bilden. Anders ausgedrückt werden die Formplatten 82, 83 in Abhängigkeit der Förderbewegung der durch die Formdüse 7 extrudierten Lebensmittelstränge 12', 12" so gesteuert, dass die Längskonturen L der scheibenförmigen Produkte 12', 12" gleichzeitig abgefahren werden. Dadurch ist gegenüber dem in den Figuren 3A-3B gezeigten Ausführungsbeispiel ein höherer Durchsatz möglich.

Des Weiteren ist zu sehen, dass die Stellglieder 84, 85 jeweils einen Antrieb 84a, 85a und einen damit verbundenen Positionsgeber 84b, 85b umfassen. Mit den Positionsgebern 84b, 85b werden die Drehpositionen der jeweiligen Antriebe 84a, 85a erfasst und an die Steuereinheit 9 rückgemeldet. Folglich können die genauen Stellpositionen der Formplatten 82, 83 erfasst und gesteuert werden. Dadurch ist eine noch genauere Formgebung der scheibenförmigen Produkte 12', 12" möglich.

Die Vorrichtung 1 der Figur 1 wird im Zusammenwirken mit der Formdüse 4 und den Formplatten 52, 53 der Figuren 3A-3B bzw. der Formdüse 7 und den Formplatten 82, 83 wie folgt eingesetzt:
Zunächst wird die pastöse Masse in den Wagen 2 gefüllt und mit einer Hebevorrichtung in den Trichter 3 gekippt. Mit dem Förderwerk 10 wird dann der Lebensmittelstrang 11, 11', 11" durch die Formdüse 4, 7 gefördert und durch die Düsenöffnung 41, 71', 71" entlang der Förderrichtung F extrudiert. Dadurch wird die Dicke D des scheibenförmigen Produkts 12, 12', 12" bestimmt. Die zwei der Formdüse 4, 7 nachgeordneten Formplatten 52, 53, 82, 83 werden beim Extrudieren mit den beiden Stellgliedern 54, 55, 84, 85 quer zur Förderrichtung F verfahren, wobei die Steuereinheit 6 die Stellglieder 54, 55 synchron zum Förderwerk 10 derart steuert, dass die zwei Formplatten 52, 53, 82, 83 die Längskontur L des scheibenförmigen Produkts 12, 12', 12" während des Extrudierens variabel formen. Dabei werden die Stellglieder 54, 55, 84, 85 mit der Steuereinheit 6 in Abhängigkeit von der Förderbewegung des Lebensmittelstrangs 11, 11', 11" verfahren und das Förderwerk 10 entsprechend gesteuert, so dass das scheibenförmige Produkt 12, 12', 12" geformt wird.

Dadurch, dass die Dicke D der scheibenförmigen Produkte 12, 12', 12" mit den Formdüsen 4,7 bestimmt wird, muss der Lebensmittelstrang 11, 11', 11" nicht mehr entlang der gewünschten Profilkontur K mit dem maximalen Durchmesser S der scheibenförmigen Produkte 12, 12', 12" abgetrennt werden. Darüber hinaus wird die Längskontur L der scheibenförmigen Produkte 12, 12', 12" durch das Verfahren der Formplatten 52, 53, 82, 83 mit den Stellgliedern 54, 55, 84, 85 geformt. Dadurch werden die scheibenförmigen Produkte 12, 12', 12" in Querrichtung besonders wenig belastet und weisen daher eine besonders geringe Formabweichung auf. Des Weiteren ist die Vorrichtung 1 durch den Einsatz der mit den Stellgliedern 54, 55, 84, 85 verfahrbaren Formplatten 52, 53, 82, 83 besonders flexibel einsetzbar, da die gewünschte Profilkontur K durch eine entsprechende Änderung in den Steuerdaten flexibel geformt werden kann.

## Patentansprüche

1. Vorrichtung (1) zum Formen und Unterteilen wenigstens eines pastösen Lebensmittelstrangs (11, 11', 11") in scheibenförmige Produkte (12, 12', 12"), mit
- einer Formdüse (4, 7) zum Extrudieren des Lebensmittelstrangs (11, 11', 11") entlang einer Förderrichtung (F) durch eine Düsenöffnung (41, 71', 71"), die die Dicke (D) des scheibenförmigen Produkts (12, 12', 12") bestimmt,
- wenigstens einer der Formdüse (4, 7) nachgeordneten Formplatte (52, 53, 82, 83), die beim Extrudieren mit wenigstens einem Stellglied (54, 55, 84, 85) in wenigstens einer Komponente quer zur Förderrichtung (F) verfahrbar ist, und
- mit einer Steuereinheit (6, 9), die das Stellglied (54, 55, 84, 85) synchron zur Extrusionsgeschwindigkeit derart steuert, dass die wenigstens eine Formplatte (52, 53, 82, 83) während des Extrudierens eine Längskontur (L) des scheibenförmigen Produkts (12, 12', 12") variabel formt,
wobei die Längskontur (L) wenigstens teilweise eine Profilkontur des scheibenförmigen Produkts (12, 12', 12") bildet, und
wobei die Formplatte (52, 53, 82, 83) derart an der Formdüse (4, 7) angeordnet ist, dass sie eine in Bezug auf die Dickenausdehnung quer liegende Produktseite formt.

2. Vorrichtung (1) nach Anspruch 1, wobei zwei oder noch mehr der Formplatten (52, 53, 82, 83) jeweils mit einem der Stellglieder (54, 55, 84, 85) verbunden sind, wobei die Stellglieder (54, 55, 84, 85) mit der Steuereinheit (6, 9) getrennt ansteuerbar ausgebildet sind, um entsprechend unterschiedliche Längskonturen (L) des scheibenförmigen Produkts (12, 12', 12") variabel zu formen.

3. Vorrichtung (1) nach Anspruch 1 oder 2, wobei ein Förderwerk (10) und/oder die Formdüse (7) zum Extrudieren mehrerer Lebensmittelstränge (11', 11") in parallelen Bahnen ausgebildet sind, und wobei die wenigstens eine Formplatte (82, 83) damit korrespondierende Formkanten (82a', 83a', 82a", 83a") aufweist, um gleichzeitig einander entsprechende Längskonturen (L) mehrerer scheibenförmige Produkte (12', 12") variabel zu formen.

4. Vorrichtung (1) nach einem der vorangegangenen Ansprüche, wobei zwei der Formplatten (52, 53, 82, 83) mit einem oder mehreren Stellgliedern (54, 55, 84, 85) korrespondierend oder unabhängig voneinander gegeneinander wirkend verfahrbar sind, um mit zwei Formkanten (52a, 53a, 82a, 83a) gegenüberliegende Längskonturen (L) des scheibenförmigen Produkts (12, 12', 12") variabel zu formen.

5. Vorrichtung (1) nach einem der vorangegangenen Ansprüche, wobei zwei oder mehrere der Formplatten (52, 53, 82, 83) in Förderrichtung (F) in derselben Ebene oder nacheinander liegend angeordnet sind.

6. Vorrichtung (1) nach einem der vorangegangenen Ansprüche, wobei das wenigstens eine Stellglied (54, 55, 84, 85) einen mit der Steuereinheit (6, 9) verbundenen Positionsgeber (54b, 55b, 84b, 85b) umfasst, um eine Stellposition der wenigstens einen Formplatte (52, 53, 82, 83) zu erfassen und zu steuern.

7. Vorrichtung (1) nach einem der vorangegangenen Ansprüche, wobei die Steuereinheit (6, 9) dazu ausgebildet ist, das wenigstens eine Stellglied (54, 55, 84, 85) in Abhängigkeit einer Förderbewegung des Lebensmittelstrangs (11, 11', 11") zu verfahren.

8. Vorrichtung (1) nach einem der vorangegangenen Ansprüche, wobei die Vorrichtung (1) ein Förderwerk (10) zum Fördern des Lebensmittelstrangs (11, 11', 11") durch die Formdüse (4, 7) umfasst, und wobei die Steuereinheit (6, 9) dazu ausgebildet ist, eine Fördergeschwindigkeit des Förderwerks (10) zu steuern, um den Lebensmittelstrang (11, 11', 11") mit einer variablen Förderbewegung durch die Formdüse (4, 7) zu fördern.

9. Vorrichtung (1) nach einem der vorangegangenen Ansprüche, wobei eine vorzugsweise obere oder untere Formfläche (41a, 41b) der Düsenöffnung (41) verstellbar ausgebildet ist, um die Dicke (D) des scheibenförmigen Produkts (12, 12', 12") einzustellen.

10. Verfahren zum Formen und Unterteilen wenigstens eines pastösen Lebensmittelstrangs (11, 11', 11") in scheibenförmige Produkte (12, 12', 12"), wobei der Lebensmittelstrang (11, 1 1', 11")durch eine Düsenöffnung (41, 71', 71") der Formdüse (4, 7) entlang einer Förderrichtung (F) extrudiert wird, wobei die Düsenöffnung (41, 71', 71") die Dicke (D) des scheibenförmigen Produkts (12, 12', 12") bestimmt, wobei wenigstens eine der Formdüse (4, 7) nachgeordnete Formplatte (52, 53, 82, 83) beim Extrudieren mit wenigstens einem Stellglied (54, 55, 84, 85) in wenigstens einer Komponente quer zur Förderrichtung (F) verfahren wird, und wobei eine Steureinheit (6, 9) das Stellglied (54, 55, 84, 85) synchron mit der Extrusionsgeschwindigkeit derart steuert, dass die wenigstens eine Formplatte (52, 53, 82, 83) während des Extrudierens eine Längskontur (L) des scheibenförmigen Produkts (12, 12', 12") variabel formt, wobei die Längskontur (L) wenigstens teilweise eine Profilkontur des scheibenförmigen Produkts (12,12', 12") bildet, und wobei die Formplatte (52, 53, 82, 83) eine in Bezug auf die Dickenausdehnung quer liegende Produktseite formt.

11. Verfahren nach Anspruch 10, wobei die Steuereinheit (6, 9) das wenigstens eine Stellglied (54, 55, 84, 85) in Abhängigkeit einer Förderbewegung des Lebensmittelstrangs (11, 11', 11") verfährt.

12. Verfahren nach Anspruch 10 oder 11, wobei die Steuereinheit (6, 9) eine Fördergeschwindigkeit eines Förderwerks (10) variabel steuert, um den Lebensmittelstrang (11, 11', 11") mit einer variablen Förderbewegung durch die Formdüse (4, 7) zu fördern.

## Claims

1. Device (1) for forming and dividing of at least one string-shaped pasty foodstuff (11, 11', 11") into slice-shaped products (12, 12', 12"), with
- a forming nozzle (4, 7) for extruding the string-shaped foodstuff (11, 11', 11") along a conveying direction (F) through a nozzle opening (41, 71', 71") that determines the thickness (D) of the slice-shaped product (12, 12', 12"),
- at least one forming plate (52, 53, 82, 83) that is arranged downstream of the forming nozzle (4, 7) and that can be displaced during extrusion with at least one positioning element (54, 55, 84, 85) in at least one component transversally to the conveying direction (F), and
- with a control unit (6, 9) that controls the positioning element (54, 55, 84, 85) synchronously to the extrusion velocity in a way that the at least one forming plate (52, 53, 82, 83) forms a longitudinal contour (L) of the slice-shaped product (12, 12', 12") variably during extrusion.
wherein the longitudinal contour (L) forms a profile contour of the slice-shaped product (12, 12', 12") at least partially, and
wherein the forming plate (52, 53, 82, 83) is arranged on the forming nozzle (4, 7) in a way that it forms a product side that is positioned transversally in relation to the thickness expansion.

2. Device (1) according to Claim 1, wherein two or even more of the forming plates (52, 53, 82, 83) are each connected to one of the positioning elements (54, 55, 84, 85), wherein the positioning elements (54, 55, 84, 85) are formed in a way that they can be activated separately with the control unit (6, 9) in order to form respectively different longitudinal contours (L) of the slice-shaped product (12, 12', 12") variably.

3. Device (1) according to Claim 1 or 2, wherein a conveyor system (10) and/or the forming nozzle (7) for extruding several string-shaped foodstuffs (11', 11") are formed in parallel lanes and wherein the at least one forming plate (82, 83) has forming edges (82a', 83a', 82a", 83a") that correspond to said parallel lanes in order to form longitudinal contours (L) of several slice-shaped products (12', 12"), which correspond to one another at the same time, variably.

4. Device (1) according to one of the preceding claims, wherein two of the forming plates (52, 53, 82, 83) can be displaced with one or multiple positioning elements (54, 55, 84, 85) correspondingly or independently of one another and in a way as to counteract with one another in order to variably form longitudinal contours (L) of the slice-shaped product (12, 12', 12"), which are located opposite to one another, with two forming edges (52a, 53a, 82a, 83a).

5. Device (1) according to one of the preceding claims, wherein two or multiple ones of the forming plates (52, 53, 82, 83) are arranged in the same plane or in a row in the conveying direction (F).

6. Device (1) according to one of the preceding claims, wherein the at least one positioning element (54, 55, 84, 85) comprises a position sensor (54b, 55b, 84b, 85b) that is connected to the control unit (6, 9) in order to record and to control a setting position of the at least one forming plate (52, 53, 82, 83).

7. Device (1) according to one of the preceding claims, wherein the control unit (6, 9) is formed to displace the at least one positioning element (54, 55, 84, 85) as a function of a conveying movement of the string-shaped foodstuff (11, 11', 11").

8. Device (1) according to one of the preceding claims, wherein the device (1) comprises a conveyor system (10) for conveying the string-shaped foodstuff (11, 11', 11") through the forming nozzle (4, 7) and wherein the control unit (6, 9) is formed to control a conveying velocity of the conveyor system (10) in order to convey the string-shaped foodstuff (11, 11', 11") with a variable conveying movement through the forming nozzle (4, 7).

9. Device (1) according to one of the preceding claims, wherein a preferably upper or lower forming surface (41a, 41b) of the nozzle opening (41) is formed in an adjustable way in order to set the thickness (D) of the slice-shaped product (12, 12', 12").

10. Method for forming and dividing of at least one string-shaped pasty foodstuff (11, 11', 11") into slice-shaped products (12, 12', 12"), wherein the string-shaped foodstuff (11, 11', 11") is extruded through a nozzle opening (41, 71', 71") of the forming nozzle (4, 7) along a conveying direction (F), wherein the nozzle opening (41, 71', 71") determines the thickness (D) of the slice-shaped product (12, 12', 12"), wherein at least one forming plate (52, 53, 82, 83) that is disposed downstream of the forming nozzle (4, 7) is displaced transversally to the conveying direction (F) during extrusion with at least one positioning element (54, 55, 84, 85) in at least one component, and wherein a control unit (6, 9) controls the positioning element (54, 55, 84, 85) synchronously with the extrusion velocity in a way that the at least one forming plate (52, 53, 82, 83) variably forms a longitudinal contour (L) of the slice-shaped product (12, 12', 12") during extrusion, wherein the longitudinal contour (L) forms a profile contour of the slice-shaped product (12, 12', 12") at least partially, and wherein the forming plate (52, 53, 82, 83) forms a product side that is positioned transversally in relation to the thickness expansion.

11. Method according to Claim 10, wherein the control unit (6, 9) displaces the at least one positioning element (54, 55, 84, 85) as a function of a conveying movement of the string-shaped foodstuff (11, 11', 11").

12. Method according to Claim 10 or 11, wherein the control unit (6, 9) variably controls a conveying velocity of a conveyor system (10) in order to convey the string-shaped foodstuff (11, 11', 11") with a variable conveying movement through the forming nozzle (4, 7).

## Revendications

1. Dispositif (1) pour former et diviser au moins une ficelle alimentaire pâteuse (11, 11', 11") en produits en forme de disque (12, 12', 12"), avec
une filière de formage (4, 7) pour l'extrusion de la ficelle alimentaire (11, 11', 11") le long d'une direction de transport (F) à travers une ouverture de filière (41, 71', 71") qui détermine l'épaisseur (D) du produit en forme de disque (12, 12', 12"),
au moins une plaque de moulage (52, 53, 82, 83) disposée en aval de la buse de moulage (4, 7), qui peut être déplacée transversalement à la direction de transport (F) pendant l'extrusion par au moins un actionneur (54, 55, 84, 85) dans au moins un composant, et
avec une unité de commande (6, 9) qui commande l'actionneur (54, 55, 84, 85) de manière synchrone avec la vitesse d'extrusion de telle sorte qu'au moins une plaque de formage (52, 53, 82, 83) forme de manière variable un contour longitudinal (L) du produit en forme de disque (12, 12', 12") pendant l'extrusion,
dans lequel le contour longitudinal (L) forme au moins partiellement un contour de profil du produit en forme de disque (12, 12', 12"), et
dans lequel la plaque de moulage (52, 53, 82, 83) est disposée au niveau de la buse de moulage (4, 7) our constituer un côté produit situé transversalement par rapport à l'extension de l'épaisseur.

2. Dispositif (1) selon la revendication 1, dans lequel deux ou même plusieurs des plaques de moulage (52, 53, 82, 83) sont chacune reliées à l'un des actionneurs (54, 55, 84, 85), les actionneurs (54, 55, 84, 85) étant conçus pour pouvoir être commandés séparément par l'unité de commande (6, 9) afin de mouler de manière variable des contours longitudinaux (L) différents et correspondants du produit en forme de disque (12, 12', 12").

3. Dispositif (1) selon les revendications 1 ou 2, dans lequel un transporteur (10) et/ou la buse de formage (7) pour l'extrusion de plusieurs ficelles alimentaires (11', 11") sont formés sur des trajets parallèles, et dans lequel ladite au moins une plaque de formage (82, 83) présente des bords de formage (82a', 83a', 82a", 83a") correspondant à celle-ci afin de former de manière variable des contours longitudinaux (L) correspondant simultanément à plusieurs produits en forme de disque (12', 12").

4. Dispositif (1) selon l'une des revendications précédentes, dans lequel deux des plaques de moulage (52, 53, 82, 83) peuvent être déplacées de manière correspondante ou indépendante l'une de l'autre avec un ou plusieurs actionneurs (54, 55, 84, 85) agissant l'un contre l'autre afin de mouler de manière variable des contours longitudinaux opposés (L) du produit en forme de disque (12, 12', 12") avec deux bords de moule (52a, 53a, 82a, 83a).

5. Dispositif (1) selon l'une des revendications précédentes, dans lequel deux ou plusieurs des plaques de moulage (52, 53, 82, 83) sont disposées dans le même plan ou successivement dans la direction de transport (F).

6. Dispositif (1) selon l'une des revendications précédentes, dans lequel ledit au moins un actionneur (54, 55, 84, 85) comprend un capteur de position (54b, 55b, 84b, 85b) relié à l'unité de commande (6, 9) pour détecter et commander une position d'actionnement de la au moins une plaque de moulage (52, 53, 82, 83).

7. Dispositif (1) selon l'une des revendications précédentes, l'unité de commande (6, 9) étant conçue pour déplacer le au moins un actionneur (54, 55, 84, 85) en fonction d'un mouvement de transport de la ficelle alimentaire (11, 11', 11").

8. Dispositif (1) selon l'une des revendications précédentes, dans lequel le dispositif (1) comprend un convoyeur (10) pour transporter la ficelle alimentaire (11, 11', 11") à travers la buse de formage (4, 7), et dans lequel l'unité de commande (6, 9) est conçue pour commander une vitesse de transport du convoyeur (10) afin de transporter la ficelle alimentaire (11, 11', 11") à travers la buse de formage (4, 7) avec un mouvement de transport variable.

9. Dispositif (1) selon l'une des revendications précédentes, dans lequel une surface de formage (41a, 41b) de préférence supérieure ou inférieure de l'ouverture de la buse (41) est conçue pour être réglable afin de régler l'épaisseur (D) du produit en forme de disque (12, 12', 12").

10. Procédé pour former et diviser au moins une ficelle alimentaire pâteuse (11, 11', 11") en produits en forme de disque (12, 12', 12"), dans lequel la ficelle alimentaire (11, 11', 11") passe à travers une ouverture de buse (41, 71', 71") de la buse de formation (4, 7) est extrudé le long d'une direction de transport (F), l'ouverture de la buse (41, 71', 71") déterminant l'épaisseur (D) du produit en forme de disque (12, 12', 12"), au moins une plaque de formage (52, 53, 82, 83) disposée en aval de la buse de formage (4, 7) étant pourvue d'au moins un actionneur (54, 55, 84) pendant l'extrusion, 85) est déplacé transversalement à la direction de transport (F) dans au moins un composant, et dans lequel une unité de commande (6, 9) commande l'actionneur (54, 55, 84, 85) de manière synchrone avec la vitesse d'extrusion de telle sorte que la au moins une plaque de moulage (52, 53, 82, 83) forme pendant l'extrusion un contour longitudinal (L) du produit en forme de disque (12, 12', 12"), le contour longitudinal (L) formant au moins partiellement un contour de profil du produit en forme de disque (12, 12', 12"), et la plaque de moulage (52, 53, 82, 83) formant un côté du produit situé transversalement par rapport à l'extension de l'épaisseur.

11. Procédé selon la revendication 10, dans lequel l'unité de commande (6, 9) déplace ledit au moins un actionneur (54, 55, 84, 85) en fonction d'un mouvement de transport de la ficelle alimentaire (11, 11', 11").

12. Procédé selon les revendications 10 ou 11, dans lequel l'unité de commande (6, 9) commande de manière variable une vitesse de transport d'un convoyeur (10) afin de transporter la ficelle alimentaire (11, 11', 11") à travers la buse de formage (4, 7) avec un mouvement de transport variable.
